# EUROPEAN PATENT APPLICATION

(11) **EP 4 756 495 A1**
(43) Date of publication of application: **10.06.2026**
(21) Application number: 24896965.1
(22) Date of filing: 05.07.2024
(51) Int. Cl.: G01S 17/34, G01S 17/58, G01S 17/95

(54) **WIND SPEED DETECTION DEVICE AND WIND SPEED DETECTION METHOD**

(30) Priority: 28.11.2023 JP 2023200618
(71) Applicant: Hamamatsu Photonics K.K., Hamamatsu-shi, Shizuoka 435-8558 (JP)
(72) Inventor: TAKAHASHI, Koji, Hamamatsu-shi, Shizuoka 435-8558 (JP); NAKAMURA, Tomonori, Hamamatsu-shi, Shizuoka 435-8558 (JP); FUKUOKA, Hirotake, Hamamatsu-shi, Shizuoka 435-8558 (JP); IKEMURA, Kenichiro, Hamamatsu-shi, Shizuoka 435-8558 (JP)
(74) Representative: Grünecker Patent- und Rechtsanwälte PartG mbB
(86) International application number: PCT/JP2024/024495
(87) International publication number: WO 2025/115273

(57) **Abstract**

A wind speed detection device 1 includes an output unit 2 that outputs CW laser light L whose frequency is non-linearly and periodically modulated, a splitting unit 3 that splits the CW laser light L into measurement light Lm and reference light Lr, a measurement optical system 6 that outputs the measurement light Lm into the atmosphere, and receives scattered light Lf of the measurement light Lm in the atmosphere as signal light Ls, and a detection unit 8 that outputs a detection signal D based on a result of interference of the reference light Lr and the signal light Ls.

## Description

### Technical Field

The present disclosure relates to a wind speed detection device and a wind speed detection method.

### Background Art

As one of sensing technologies using light, light detection and ranging (LIDAR) is known. In recent years, LIDAR has been applied in the field of autonomous driving, but is originally a technique widely used in the meteorological field and the like. As LIDAR used in the meteorological field, so-called WindLIDAR that detects wind speed is known. The WindLIDAR is used, for example, for a wind-conditions survey for selecting an installation place of a wind power generator, and is expected to be applied to safe operation management of a flying object such as a drone in recent years.

Coherent detection is used for wind speed detection by LIDAR. In this method, laser light output from a light source is split into measurement light and reference light, a modulation and amplification are applied to the measurement light, and then the measurement light is emitted into the atmosphere. A signal source in the WindLIDAR is scattered light generated by measurement light being scattered by countless aerosols in the atmosphere. When wind blows, aerosols move on the wind, and a frequency of scattered light changes (Doppler shift). Therefore, by causing the scattered light from the atmosphere to interfere with the reference light as signal light and obtaining a shift amount of a peak frequency in a beat spectrum of the interference light, the wind speed in the atmosphere can be detected (refer to, for example, Patent Literature 1).

### Citation List

### Patent Literature

Patent Literature 1: U.S. Unexamined Patent Application Publication No. 2021/0109218

### Summary of Invention

### Technical Problem

A LIDAR method includes a method using pulsed light and a method using continuous wave (CW) light. With the method using pulsed light, a range resolution depends on a pulse width and does not depend on a detection range, but there is a problem that optical amplification of the measurement light requires a high cost. On the other hand, with the method using the CW light, the optical amplification of the measurement light requires a low cost, but there is a problem that the range resolution depends on a focal depth of the measurement light and has dependence on the detection range, because the measurement is performed while changing a focal position of the measurement light.

The present disclosure has been made to solve the above problem, and an object of the present disclosure is to provide a wind speed detection device and a wind speed detection method capable of detecting wind speed at low cost and with high range resolution without depending on a detection range.

### Solution to Problem

The gist of the present disclosure is as follows.
[1] A wind speed detection device including
   an output unit configured to output CW laser light whose frequency is non-linearly and periodically modulated,
   a splitting unit configured to split the CW laser light into measurement light and reference light,
   a measurement optical system configured to output the measurement light into the atmosphere, and receive scattered light of the measurement light in the atmosphere as signal light, and
   a detection unit configured to output a detection signal based on a result of interference of the reference light and the signal light.
   In the wind speed detection device, the CW laser light used as the measurement light and the reference light is modulated so that the frequency is non-linear and periodic. By using the CW laser light, a cost required for optical amplification of the measurement light can be reduced as compared with a case of using pulsed light. In addition, by modulating the CW laser light so that the frequency is non-linear and periodic, coherent detection in accordance with optical correlation-domain reflectometry (OCDR) can be performed. In the coherent detection, the range resolution depends on a frequency modulation width, and the dependence on the detection range can be eliminated. Therefore, the wind speed detection device can detect wind speed at low cost and with high range resolution without depending on the detection range.
[2] The wind speed detection device according to [1], in which a frequency of the CW laser light is modulated in a sinusoidal shape. In this case, the coherent detection in accordance with the OCDR can be suitably performed.
[3] The wind speed detection device according to [2], in which the measurement optical system includes an optical element configured to focus the measurement light into the atmosphere. In the OCDR, there is a plurality of measurement points for a certain modulation frequency, but a single measurement point can be extracted from the plurality of measurement points by focusing the measurement light into the atmosphere and adjusting a range weighting function (RWF) for the detection range to a focal position of the measurement light.
[4] The wind speed detection device according to [3], in which the measurement optical system includes a scanning unit that scans a focal position of the measurement light in the atmosphere in an optical axis direction of the measurement light. In this case, the wind speed can be detected in a wide range by scanning, in the optical axis direction of the measurement light, the single measurement point extracted by the RWF.
[5] The wind speed detection device according to [1] or [2], in which the measurement optical system includes an optical element configured to collimate the measurement light and output the collimated measurement light into the atmosphere. Even in a state where the measurement light is collimated, the single measurement point can be extracted by the RWF under a collimation condition.
[6] The wind speed detection device according to [1] or [2], in which a frequency of the CW laser light is modulated such that a linear change is superimposed on a non-linear and periodic modulation, and the measurement optical system includes an optical element configured to collimate the measurement light and output the collimated measurement light into the atmosphere. In this case, even in a state where the measurement light is collimated, the single measurement point can be extracted from the plurality of measurement points by separating, on a frequency axis, the plurality of measurement points for a certain modulation frequency.
[7] The wind speed detection device according to any one of [1] to [6], in which the measurement optical system includes a deflection unit configured to deflect an output direction of the measurement light directed to the atmosphere.
   In this case, because the output direction of the measurement light is variable, the wind speed can be detected in a wide range.
[8] The wind speed detection device according to any one of [1] to [7], in which a photonic integrated circuit includes at least the output unit, the splitting unit, and the detection unit. Thus, the device can be downsized.
[9] The wind speed detection device according to any one of [1] to [8], further including a signal generation unit configured to generate a modulation signal for the CW laser light. Thus, the modulation of the CW laser light can be easily performed.
[10] The wind speed detection device according to any one of [1] to [9], further including an analysis unit configured to analyze a wind speed in the atmosphere on the basis of the detection signal. In this case, a series of processes from output of the measurement light to analysis of the wind speed can be performed in one device.
[11] The wind speed detection method including an output step of outputting CW laser light whose frequency is non-linearly and periodically modulated, a splitting step of splitting the CW laser light into measurement light and reference light, a measurement step of outputting the measurement light into the atmosphere, and receiving scattered light of the measurement light in the atmosphere as signal light, and a detection step of outputting a detection signal based on a result of interference of the reference light and the signal light.
   In the wind speed detection method, the CW laser light used as the measurement light and the reference light is modulated so that the frequency is non-linear and periodic. By using the CW laser light, a cost required for optical amplification of the measurement light can be reduced as compared with a case of using pulsed light. In addition, by modulating the CW laser light so that the frequency is non-linear and periodic, coherent detection in accordance with optical correlation-domain reflectometry (OCDR) can be performed. In the coherent detection, the range resolution depends on a frequency modulation width, and the dependence on the detection range can be eliminated. Therefore, the wind speed detection method can detect wind speed at low cost and with high range resolution without depending on the detection range.
[12] The wind speed detection method according to [11], in which, in the output step, a frequency of the CW laser light is modulated in a sinusoidal shape. In this case, the coherent detection in accordance with the OCDR can be suitably performed.
[13] The wind speed detection method according to [12], in which, in the measurement step, the measurement light is focused into the atmosphere. In the OCDR, there is a plurality of measurement points for a certain modulation frequency, but a single measurement point can be extracted from the plurality of measurement points by focusing the measurement light into the atmosphere and adjusting the RWF for the detection range to a focal position of the measurement light.
[14] The wind speed detection method according to [13], in which, in the measurement step, a focal position of the measurement light in the atmosphere is scanned in an optical axis direction of the measurement light. In this case, the wind speed can be detected in a wide range by scanning, in the optical axis direction of the measurement light, the single measurement point extracted by the RWF.
[15] The wind speed detection method according to [11] or [12], in which, in the measurement step, the measurement light is collimated and output into the atmosphere. Even in a state where the measurement light is collimated, the single measurement point can be extracted by the RWF under a collimation condition.
[16] The wind speed detection method according to [11] or [12], in which, in the output step, a frequency of the CW laser light is modulated such that a linear change is superimposed on a non-linear and periodic modulation, and in the measurement step, the measurement light is collimated and output into the atmosphere. In this case, even in a state where the measurement light is collimated, the single measurement point can be extracted from the plurality of measurement points by separating, on a frequency axis, the plurality of measurement points for a certain modulation frequency.
[17] The wind speed detection method according to any one of [11] to [16], in which, in the measurement step, an output direction of the measurement light directed to the atmosphere is deflected. In this case, because the output direction of the measurement light is variable, the wind speed can be detected in a wide range.
[18] The wind speed detection method according to any one of [11] to [17], further including an analysis step of analyzing a wind speed in the atmosphere on the basis of the detection signal. In this case, the series of processes from the output of the measurement light to analysis of the wind speed can be performed.

### Advantageous Effects of Invention

According to the present disclosure, it is possible to detect wind speed at low cost and with high range resolution without depending on a detection range.

### Brief Description of Drawings

FIG. 1 is a schematic diagram illustrating a configuration of a wind speed detection device according to an embodiment of the present disclosure.
FIGS. 2(a) and 2(b) are diagrams illustrating an example of frequency-modulated CW laser light.
FIG. 3 is a diagram illustrating an example of a relationship between modulation rates and measurement points.
FIG. 4 is a schematic diagram illustrating a 1st measurement method.
FIG. 5 is a diagram illustrating a calculation example of an RWF under a collimation condition.
FIG. 6 is a schematic diagram illustrating a 2nd measurement method.
FIG. 7 is a schematic diagram illustrating a 3rd measurement method.
FIG. 8 is a flowchart illustrating an example of a wind speed detection method according to an embodiment of the present disclosure.
FIG. 9(a) is a diagram illustrating simulation conditions of a wind speed detection by a measurement method according to a comparative example, and 9(b) is a diagram illustrating a result thereof.
FIGS. 10(a) to 10(d) are diagrams illustrating fluctuation of a peak frequency of a beat spectrum of interference light in the comparative example.
FIG. 11(a) is a diagram illustrating simulation conditions of a wind speed detection by a measurement method according to Example 1 (1st measurement method), and 11(b) is a diagram illustrating a result thereof.
FIG. 12 is a diagram illustrating a waveform of a beat spectrum of interference light in Example 1.
FIG. 13(a) is a diagram illustrating simulation conditions of a wind speed detection by a measurement method according to Example 2 (2nd measurement method), and 13(b) is a diagram illustrating a result thereof.
FIGS. 14(a) to 14(d) are diagrams illustrating fluctuation of a peak frequency of a beat spectrum of interference light in Example 2.
FIG. 15(a) is a diagram illustrating simulation conditions of a wind speed detection by a measurement method according to Example 3 (3rd measurement method), and 15(b) is a diagram illustrating a result thereof.
FIGS. 16(a) to 16(d) are diagrams illustrating fluctuation of a peak frequency of a beat spectrum of interference light in Example 3.
FIG. 17 is a diagram illustrating a wide area of a beat spectrum of the interference light in Example 3.
FIG. 18(a) is a diagram illustrating simulation conditions of a wind speed detection by a measurement method according to Example 4 (a combination of the 2nd measurement method and the 3rd measurement method), and 18(b) is a diagram illustrating a result thereof.
FIGS. 19(a) to 19(d) are diagrams illustrating fluctuation of a peak frequency of a beat spectrum of interference light in Example 4.
FIG. 20 is a schematic diagram illustrating a configuration of a wind speed detection device according to a modification.

### Description of Embodiments

Hereinafter, a preferred embodiment of a wind speed detection device according to one aspect of the present disclosure will be described in detail with reference to the drawings.

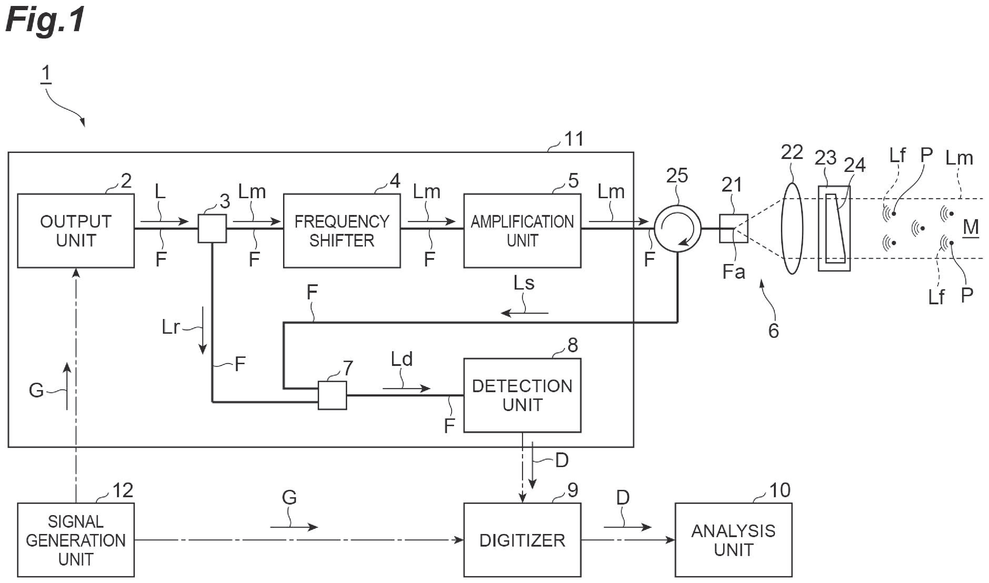

FIG. 1 is a schematic diagram illustrating a configuration of a wind speed detection device according to an embodiment of the present disclosure. A wind speed detection device 1 illustrated in FIG. 1 is a device that detects a wind speed in the atmosphere M with light detection and ranging (LIDAR). In the wind speed detection device 1, a frequency modulation method using CW laser light L is adopted. The wind speed detection device 1 modulates the CW laser light L so that a frequency thereof is non-linear and periodic, and performs coherent detection in accordance with optical correlation-domain reflectometry (OCDR) between signal light Ls and reference light Lr, thereby detecting the wind speed in the atmosphere M.

As illustrated in FIG. 1, the wind speed detection device 1 includes an output unit 2, a splitting unit 3, a frequency shifter 4, an amplification unit 5, a measurement optical system 6, a combining unit 7, a detection unit 8, a digitizer 9, and an analysis unit 10. In the present embodiment, the output unit 2 and the frequency shifter 4, the frequency shifter 4 and the amplification unit 5, the amplification unit 5 and the measurement optical system 6, the output unit 2 and the detection unit 8, and the measurement optical system 6 and the detection unit 8 are all optically connected by optical fiber F.

In addition, in the present embodiment, a photonic integrated circuit (PIC) 11 includes at least the output unit 2, the splitting unit 3, and the detection unit 8. In the present embodiment, the photonic integrated circuit 11 includes the output unit 2, the splitting unit 3, the frequency shifter 4, the amplification unit 5, the combining unit 7, the detection unit 8, and the optical fiber F connecting them.

The output unit 2 is a part that outputs the CW laser light L whose frequency is non-linearly and periodically modulated. Examples of a laser device that constitutes the output unit 2 include a distributed feedback laser (DFB) device, a distributed Bragg reflection (DBR) laser device, and an external cavity laser device. Here, the CW laser light L is not light such as diffusion light but beam light having constant directivity.

A current control unit and a temperature control unit (not illustrated) are connected to the output unit 2. The current control unit is a controller that supplies drive current to the laser device that constitutes the output unit 2. The current control unit modulates the drive current to modulate the frequency of the CW laser light L output from the output unit 2. The temperature control unit is a controller that maintains a temperature of the laser device constant, the laser device constituting the output unit 2. The temperature control unit is configured including, for example, a thermistor and a Peltier element, and drives the Peltier element on the basis of a temperature measurement value of the thermistor attached to the laser device, such that the temperature of the laser device is maintained constant.

A signal generation unit 12 is connected to the output unit 2. The signal generation unit 12 is a part that generates a modulation signal G for the CW laser light L. The signal generation unit 12 includes, for example, a waveform generator, a function generator, and the like. The signal generation unit 12 generates a voltage signal for modulating, into an arbitrary shape, a current waveform output from the current control unit connected to the output unit 2. The modulation signal G generated by the signal generation unit 12 is also output to the digitizer 9 in order to synchronize operation of the output unit 2 with operation of the analysis unit 10.

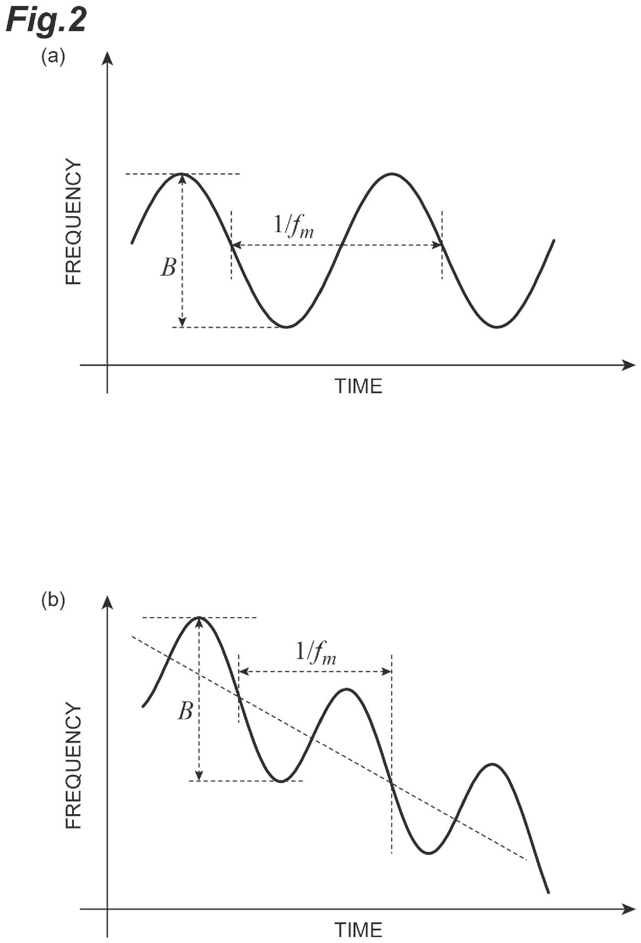

FIG. 2(a) and FIG. 2(b) are diagrams illustrating an example of frequency-modulated CW laser light L. In the present embodiment, the frequency of the CW laser light L output from the output unit 2 is non-linearly and periodically modulated on the basis of the modulation signal G from the signal generation unit 12. In FIG. 2(a), as an example of a non-linear and periodic modulation, the frequency of the CW laser light L is modulated in a sinusoidal shape. The frequency of the CW laser light L may be modulated into a cosine wave shape having a phase advanced by 90° with respect to a sine wave. In FIG. 2(b), a linear change is superimposed in addition to the modulation in FIG. 2(a). In the example in FIG. 2(b), the frequency of the CW laser light L is modulated in a sinusoidal shape, and an amplitude thereof is modulated so as to linearly decrease with time. The superimposition of the linear change as illustrated in FIG. 2(b) is performed by, for example, the above-described modulation of the drive current.

The splitting unit 3 is a part that splits the CW laser light L whose frequency is non-linearly and periodically modulated into measurement light Lm and the reference light Lr. The splitting unit 3 includes, for example, an optical fiber coupler. The measurement light Lm is output from one output port of the splitting unit 3 to the frequency shifter 4, and the reference light Lr is output from another output port of the splitting unit 3 to the combining unit 7.

The frequency shifter 4 is a part that shifts a frequency of the measurement light Lm. The frequency shifter 4 includes, for example, an acousto-optic element, an electro-optic element, an IQ modulator, a phase modulator, an intensity modulator, or the like. The frequency shifter 4 may include a signal generation unit (not illustrated) that generates a voltage signal for driving the frequency shifter 4. The signal generation unit may include, for example, a waveform generator, a function generator, and the like.

The amplification unit 5 is a part that amplifies the intensity of the measurement light Lm. The amplification unit 5 includes, for example, a semiconductor optical amplifier, an optical fiber amplifier, or the like. The current control unit and the temperature control unit (not illustrated) are connected to the amplification unit. The current control unit is a controller that supplies drive current to an amplification device that constitutes the amplification unit 5. The current control unit modulates the drive current to control a multiplication factor of the measurement light Lm in the amplification unit 5. The temperature control unit is a controller that maintains a temperature of a multiplication device constant, the multiplication device constituting the amplification unit 5. The temperature control unit is configured including, for example, a thermistor and a Peltier element, and drives the Peltier element on the basis of a temperature measurement value of the thermistor attached to the multiplication device, such that temperature of the multiplication device is maintained constant.

The measurement optical system 6 is a part that outputs the measurement light Lm into the atmosphere M and receives scattered light Lf of the measurement light Lm in the atmosphere M as the signal light Ls. The measurement optical system 6 includes a movable stage (scanning unit) 21, a lens (optical element) 22, and a rotation stage (deflection unit) 23 on which a beam deflection plate 24 is mounted. The movable stage 21 is a stage having a movable axis at least in an optical axis direction of the measurement light Lm output from an end Fa of the optical fiber F connected to an output port of the amplification unit 5. For drive of the movable stage 21, for example, a drive element such as a stepping motor or a piezoelectric element is used. A stage controller (not illustrated) is connected to the movable stage 21. The stage controller outputs a control signal for controlling a position of the movable stage to the drive element.

When the movable stage 21 is displaced in the optical axis direction of the measurement light Lm output from the end Fa of the optical fiber F, a distance from the end Fa of the optical fiber F to the lens 22 can be changed. Thus, a focal position of the measurement light Lm emitted into the atmosphere M through the lens 22 can be displaced in the optical axis direction of the measurement light Lm, and the measurement light Lm emitted into the atmosphere M through the lens 22 can be collimated.

The beam deflection plate 24 is a part that deflects, to an arbitrary direction, an output direction of the measurement light Lm directed to the atmosphere M. As the beam deflection plate 24, for example, a wedge substrate or the like can be used. The rotation stage 23 is a stage that rotates the beam deflection plate 24 about an optical axis of the measurement light Lm. Similarly to the drive of the movable stage 21, a drive element such as, for example, a stepping motor or a piezoelectric element is used for drive of the rotation stage 23. A stage controller (not illustrated) is connected to the movable stage 21. The stage controller outputs a control signal for controlling a position of the rotation stage to the drive element.

The lens 22 is an optical element that focuses or collimates the measurement light Lm. As the lens 22, for example, a convex lens, an achromatic lens, an aspherical lens, a combination lens formed by combining a plurality of lenses, or the like is used. In the measurement optical system 6, the measurement light Lm output from the end Fa of the optical fiber F is emitted into the atmosphere M as beam light having constant directivity through the lens 22 in a direction based on a rotation angle of the beam deflection plate 24. A signal source in the wind speed detection device 1 is the scattered light Lf generated by the measurement light Lm being scattered by countless aerosols P in the atmosphere M. Through the lens 22, some of the scattered light Lf returns to the end Fa of the optical fiber F again as the signal light Ls. The signal light Ls is separated from the measurement light Lm by a circulator 25 and output to the combining unit 7.

The combining unit 7 is a part that combines the reference light Lr from the output unit 2 and the signal light Ls returned from the atmosphere M. The combining unit 7 includes, for example, an optical fiber coupler. The combining unit 7 generates interference light Ld with the reference light Lr and the signal light Ls. The interference light Ld is output from an output port of the combining unit 7 to the detection unit 8.

The detection unit 8 is a part that outputs a detection signal D based on a result of the interference of the reference light Lr and the signal light Ls. The detection unit 8 includes, for example, a photodetector, an avalanche photodiode, a balance detector, or the like. The detection unit 8 outputs an analog electric signal based on the interference light Ld input from the combining unit 7 to the digitizer 9 as the detection signal D.

The digitizer 9 is a device that converts the analog electrical signal into a digital signal. The digitizer 9 includes, for example, an A/D converter or the like. The digitizer 9 converts the analog electric signal, which is the detection signal D, into a digital signal, and outputs the converted digital signal to the analysis unit 10.

The analysis unit 10 is a part that analyzes the wind speed in the atmosphere M on the basis of the detection signal D. The analysis unit 10 is physically a computer system including a memory such as a RAM and a ROM, a processor such as a CPU and a GPU, a communication interface, and a storage unit such as a hard disk. Examples of the computer system include a personal computer, a cloud server, a smart device (smartphone, tablet terminal, or the like), a microcomputer, and a field-programmable gate array (FPGA). The analysis unit functions as the analysis unit 10 by executing a program stored in the memory with the CPU or the GPU.

As described above, the signal source in the wind speed detection device 1 is the scattered light Lf generated by the measurement light Lm being scattered by the countless aerosols P in the atmosphere M. When wind blows in the atmosphere M, the aerosols P move on the wind, and a frequency of the scattered light Lf changes (Doppler shift). Upon receiving the detection signal D output from the digitizer 9, the analysis unit 10 refers to a peak frequency of a beat spectrum of the interference light Ld on the basis of the detection signal D. The analysis unit 10 detects the wind speed in the atmosphere M by obtaining a shift amount of a peak frequency of the beat spectrum of the interference light Ld.

As illustrated in FIG. 2(a) or FIG. 2(b), in case where the coherent detection is performed by using the CW laser light L having a non-linearly and periodically modulated frequency, a range resolution and detection range of a wind speed detection can be calculated according to a range resolution and detection range in an optical correlation-domain reflectometry (OCDR) used for optical fiber sensing.

When a modulation width of the CW laser light L modulated as illustrated in FIG. 2(a) or FIG. 2(b) is B and a speed of light is c, a range resolution ΔZr is expressed by ΔZr = 0.48 x (c/B). In addition, when a modulation rate of the modulated CW laser light L is fm and the speed of light is c as illustrated in FIG. 2(a) or FIG. 2(b), a detection range ZR is expressed by ZR = c/(2 x fm). For example, when a modulation width B is 100 MHz and a modulation rate fm is 214 kHz, the range resolution ΔZr is estimated to be 1.4 m, and the detection range ZR is estimated to be 700 m.

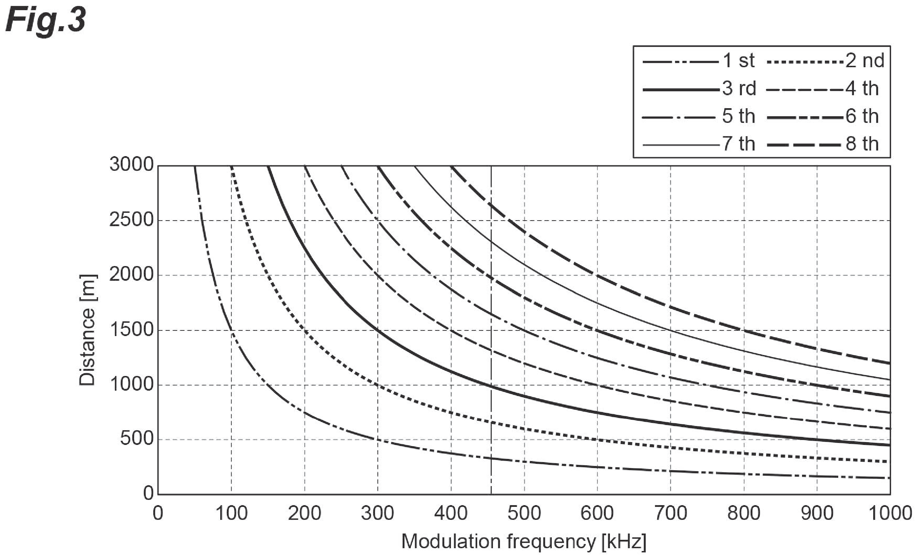

In the optical fiber sensing by the ODCR, when a measurement point is N, ZN = (c/(2 x fm)) x N holds. Therefore, for example, as illustrated in FIG. 3, there is a plurality of measurement points for one modulation rate fm. In an example of the optical fiber sensing, a length of a delay fiber that guides reference light and a length of a fiber under test (FUT) are adjusted such that there is a single measurement point on the FUT. For example, in FIG. 3, when the modulation rate fm is 457.4 kHz to 458.4 kHz, the length of the delay fiber is 2 km, and the length of the FUT is 100 m, a vicinity of 2350 m where a 7th peak of the beat spectrum of interference light is positioned can be extracted as the single measurement point.

Meanwhile, in the wind speed detection device 1, because a target to be measured is the atmosphere M and the measurement light is emitted to a free space (that is, there is no FUT), it is impossible to unify the measurement points by adjusting the length of the FUT. In addition, it is also difficult to dispose a long delay fiber in an optical path of the reference light Lr from a viewpoint of downsizing the device. Therefore, in the wind speed detection device 1, unification of the measurement points with respect to one modulation rate fm is achieved by applying any one of the following three measurement methods.

In a 1st measurement method, the measurement optical system 6 is set to a collimation condition that is a condition under which the detection range is widest, and a range weighting function (RWF) under the collimation condition is used, by which influence of 2nd and subsequent peaks of the beat spectrum of the interference light Ld is reduced to unify the measurement points.

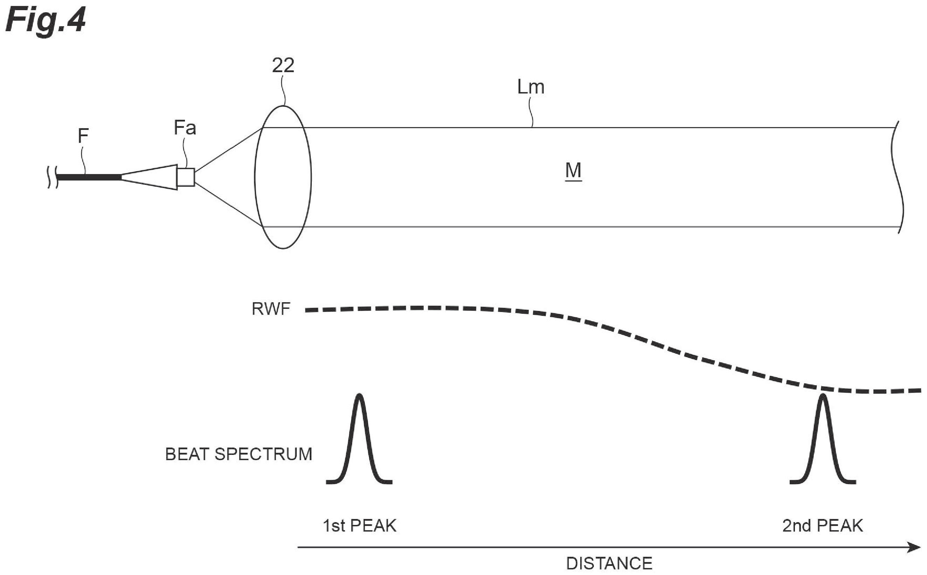

In the 1st measurement method, for example, as illustrated in FIG. 2(a), the CW laser light L whose frequency is modulated in a sinusoidal shape is used as the measurement light Lm. In addition, as illustrated in FIG. 4, the distance from the end Fa of the optical fiber F to the lens 22 is adjusted by the movable stage 21, and the measurement light Lm emitted into the atmosphere M through the lens 22 is set as parallel light. The RWF under the collimation condition is not constant, and is a function that decreases as a distance from the lens 22 increases. Such behavior of the RWF is caused by a laser beam diameter extending with propagation due to a diffraction phenomenon in the free space and an amount of the scattered light Lf captured (that is, an amount of scattered light Lf that returns to the lens 22) decreasing with the propagation.

As illustrated in FIG. 4, for example, the RWF under the collimation condition takes a substantially constant 1st value when the distance from the lens 22 is in a constant range from 0, and then gradually decreases as the distance increases and converges to a 2nd value smaller than the 1st value. Therefore, for example, the modulation rate fm or RWF is adjusted such that a 1st-order peak of the beat spectrum of the interference light Ld is positioned in a range in which the RWF takes the 1st value, and a 2nd-order peak of the beat spectrum of the interference light Ld is positioned in a range in which the RWF takes the 2nd value, by which the measurement points for wind speed detection can be unified.

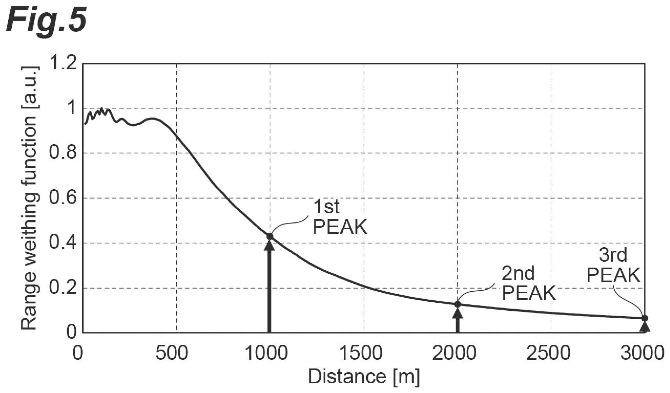

FIG. 5 is a diagram illustrating a calculation example of the RWF under the collimation condition. FIG. 5 illustrates a simulation result of the RWF with respect to the distance in a case where a lens diameter is 50 mm, a lens focal length is 237 mm, a distance between an end of an optical fiber and a lens is 237 mm, and a wavelength of measurement light is 1550 nm. According to this result, for example, a 1st-order peak of a beat spectrum of interference light appears at a position of 1000 m, and 2nd order and 3rd-order peaks of the beat spectrum of the interference light appear at positions of 2000 m and 3000 m, which are integral multiples thereof, respectively. Because the RWF at the distance of 1000 m exceeds 0.4 and the RWF at and after the distance of 2000 m is less than 0.2, it is possible to reduce influence of the 2nd and subsequent peaks in wind speed detection based on the 1st-order peak.

Note that, in the 1st measurement method, in a case where influence of a Oth-order peak is reduced in the wind speed detection based on the 1st-order peak, a delay fiber may be introduced into the optical path of the reference light Lr. In this case, by adjusting the length of the delay fiber and setting the Oth-order peak out of a detection range, the influence of the Oth-order peak can be reduced in the wind speed detection based on the 1st-order peak.

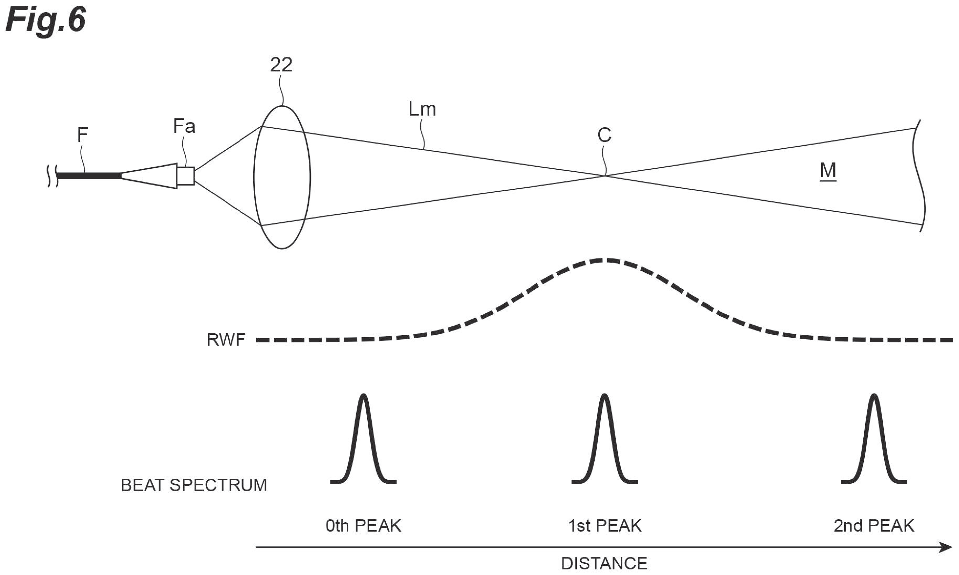

In a 2nd measurement method, for example, as illustrated in FIG. 2(a), the CW laser light L whose frequency is modulated in a sinusoidal shape is used as the measurement light Lm. In addition, as illustrated in FIG. 6, the distance from the end Fa of the optical fiber F to the lens 22 is adjusted by the movable stage 21, and the measurement light Lm emitted through the lens 22 is focused into the atmosphere M. For example, as illustrated in FIG. 6, the RWF under a light focusing condition is a Lorentzian function having a peak at a focal position C of the measurement light Lm. Therefore, a full width at half maximum of the modulation rate fm or RWF is adjusted such that the 1st-order peak of the beat spectrum of the interference light Ld is positioned at the focal position C (peak position of the RWF) of the measurement light Lm, and the 0th order, and the 2nd and subsequent-order peaks of the beat spectrum of the interference light Ld are positioned at positions other than the focal position C (peak position of the RWF) of the measurement light Lm, by which the measurement points for the wind speed detection can be unified.

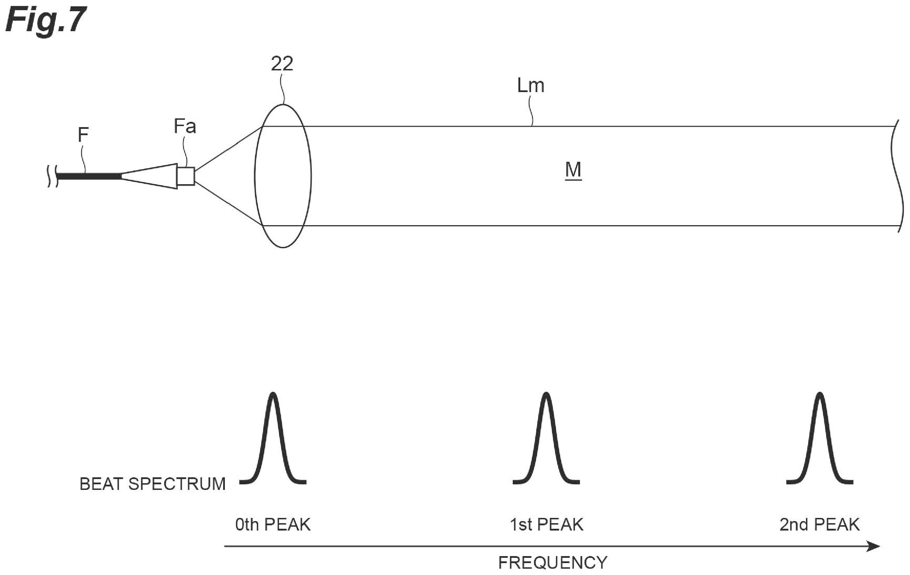

In a 3rd measurement method, for example, as illustrated in FIG. 2(b), the CW laser light L whose frequency is modulated in a sinusoidal shape and an amplitude thereof is modulated so as to linearly decrease with time is used as the measurement light Lm. In addition, as illustrated in FIG. 7, the distance from the end Fa of the optical fiber F to the lens 22 is adjusted by the movable stage 21, and the measurement light Lm emitted into the atmosphere M through the lens 22 is set as parallel light. In the 3rd measurement method, the frequency of the measurement light Lm linearly decreases with time, and therefore, a peak of each order of the beat spectrum of the interference light Ld can be separated on a frequency axis according to the distance. Therefore, it is possible to unify the measurement points for the wind speed detection without setting the RWF.

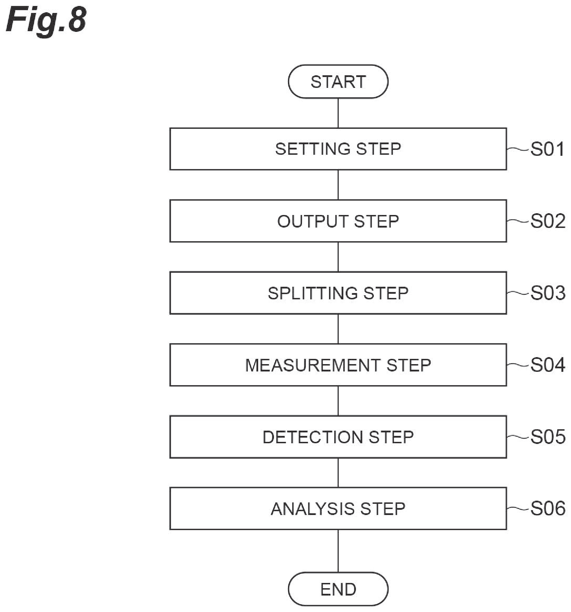

FIG. 8 is a flowchart illustrating an example of a wind speed detection method according to an embodiment of the present disclosure. In the present embodiment, the wind speed detection method is performed by using the wind speed detection device 1 described above. This wind speed detection method includes a setting step (step S01), an output step (step S02), a splitting step (step S03), a measurement step (step S04), a detection step (step S05), and an analysis step (step S06).

The setting step S01 is a step of setting various measurement conditions for the wind speed detection. In the setting step S01, for example, the detection range is set, and the modulation rate fm of the frequency of the measurement light Lm is set according to the set detection range. In a case where the 1st measurement method or the 3rd measurement method is used, an interval between the end Fa of the optical fiber F and the lens 22 is set such that the measurement light Lm emitted into the atmosphere M through the lens 22 is parallel light. In a case where the 2nd measurement method is used, the focal position C of the measurement light Lm is set according to the set detection range, and the interval between the end Fa of the optical fiber F and the lens 22 is set according to the set focal position C. Furthermore, in the setting step S01, intensity of the CW laser light L output from the output unit 2, a multiplication factor of the signal light Ls in the amplification unit 5, the output direction of the measurement light Lm by the beam deflection plate 24, and the like are set.

The output step S02 is a step of outputting the CW laser light L whose frequency is non-linearly and periodically modulated. In the output step S02, the modulation signal G generated by the signal generation unit 12 is input to the output unit 2 to modulate the frequency of the CW laser light L. In a case where the 1st measurement method or the 2nd measurement method is used, as illustrated in FIG. 2(a), the CW laser light L whose frequency is modulated in a sinusoidal shape is output from the output unit 2. In a case where the 3rd measurement method is used, as illustrated in FIG. 2(b), the CW laser light L whose frequency is modulated in a sinusoidal shape and the amplitude thereof is modulated so as to linearly decrease with time is output from the output unit 2.

The splitting step S03 is a step of splitting the CW laser light L into the measurement light Lm and the reference light Lr. In the splitting step S03, the CW laser light L output from the output unit 2 is split, and one ray is set as the measurement light Lm and another ray is set as the reference light Lr. The measurement light Lm is guided to the measurement optical system 6 through the frequency shifter 4 and the amplification unit 5. The reference light Lr is directly guided to the combining unit 7 without passing through these components.

The measurement step S04 is a step of outputting the measurement light Lm into the atmosphere M and receiving the scattered light Lf of the measurement light Lm in the atmosphere M as the signal light Ls. In the measurement step S04, the measurement light Lm output from the end Fa of the optical fiber F is emitted into the atmosphere M through the lens 22. The measurement light Lm is scattered by the countless aerosols P in the atmosphere M to be the scattered light Lf. Through the lens 22, some of the scattered light Lf returns to the end Fa of the optical fiber F again as the signal light Ls, and is combined with the reference light Lr by the combining unit 7 to generate the interference light Ld.

The detection step S05 is a step of outputting a detection signal based on the result of the interference of the reference light Lr and the signal light Ls. In the detection step S05, the detection unit 8 detects the interference light Ld generated by the combining unit 7, and generates the analog electric signal based on the interference light Ld as the detection signal D. The generated detection signal D is analog-to-digital converted by the digitizer 9 and output to the analysis unit 10.

The analysis step S06 is a step of analyzing the wind speed in the atmosphere M on the basis of the detection signal D. In the analysis step S06, the peak frequency of a beat spectrum of the interference light Ld is referred to on the basis of the detection signal D. Then, the wind speed in the atmosphere M is detected by obtaining the shift amount of the peak frequency of the beat spectrum of the interference light Ld. Thereafter, in a case where the detection is performed at a different distance, the detection range or the like is reset in step S01, and steps S02 to S08 are executed again. After the wind speed is detected within a desired distance range, the process is ended.

As described above, in the wind speed detection device 1, the CW laser light L used as the measurement light Lm and the reference light Lr is modulated so that the frequency is non-linear and periodic. By using the CW laser light L, a cost required for optical amplification of the measurement light Lm can be reduced as compared with a case of using pulsed light. In addition, by modulating the CW laser light L so that the frequency is non-linear and periodic, the coherent detection in accordance with optical correlation-domain reflectometry (OCDR) can be performed. In the coherent detection, the range resolution depends on a frequency modulation width, and the dependence on the detection range can be eliminated. Therefore, the wind speed detection device 1 can detect the wind speed at low cost and with high range resolution without depending on the detection range.

In the present embodiment, the frequency of the CW laser light L is modulated in a sinusoidal shape. With such a modulation, the coherent detection in accordance with the OCDR can be suitably performed.

In the present embodiment, the measurement optical system 6 includes the lens 22 that focuses the measurement light Lm into the atmosphere M. In the OCDR, there is a plurality of measurement points for a certain modulation frequency, but a single measurement point can be extracted from the plurality of measurement points by focusing the measurement light Lm into the atmosphere M and adjusting the RWF for the detection range to the focal position C of the measurement light Lm (2nd measurement method).

In the present embodiment, the measurement optical system 6 includes the movable stage 21 to which the end Fa of the optical fiber F is fixed as a scanning unit that scans, in the optical axis direction of the measurement light Lm, the focal position C of the measurement light Lm in the atmosphere M. The wind speed can be detected in a wide range by the movable stage 21 scanning, in the optical axis direction of the measurement light Lm, the single measurement point extracted by the RWF.

In the present embodiment, the measurement optical system 6 includes the lens 22 that collimates the measurement light Lm and outputs the collimated measurement light Lm into the atmosphere M. Even in a state where the measurement light Lm is collimated, the single measurement point can be extracted by the RWF under a collimation condition (1st measurement method).

The present embodiment includes an aspect in which the frequency of the CW laser light L is modulated such that a linear change is superimposed on a non-linear and periodic modulation, and the measurement optical system 6 collimates the measurement light Lm and outputs the collimated measurement light Lm into the atmosphere M (3rd measurement method). In this case, even in a state where the measurement light Lm is collimated, the single measurement point can be extracted from the plurality of measurement points by separating, on a frequency axis, the plurality of measurement points for a certain modulation frequency.

In the present embodiment, the measurement optical system 6 includes the rotation stage 23 on which the beam deflection plate 24 is mounted, as the deflection unit that deflects the output direction of the measurement light Lm directed to the atmosphere M. Thus, because the output direction of the measurement light Lm is variable, the wind speed can be detected in a wide range.

In the present embodiment, the photonic integrated circuit 11 includes at least the output unit 2, the splitting unit 3, and the detection unit 8. Thus, the device can be downsized. In addition, in the present embodiment, the signal generation unit 12 that generates the modulation signal G for the CW laser light L is further included. Thus, the modulation of the CW laser light L can be easily performed.

Hereinafter, Examples of the present disclosure will be described.

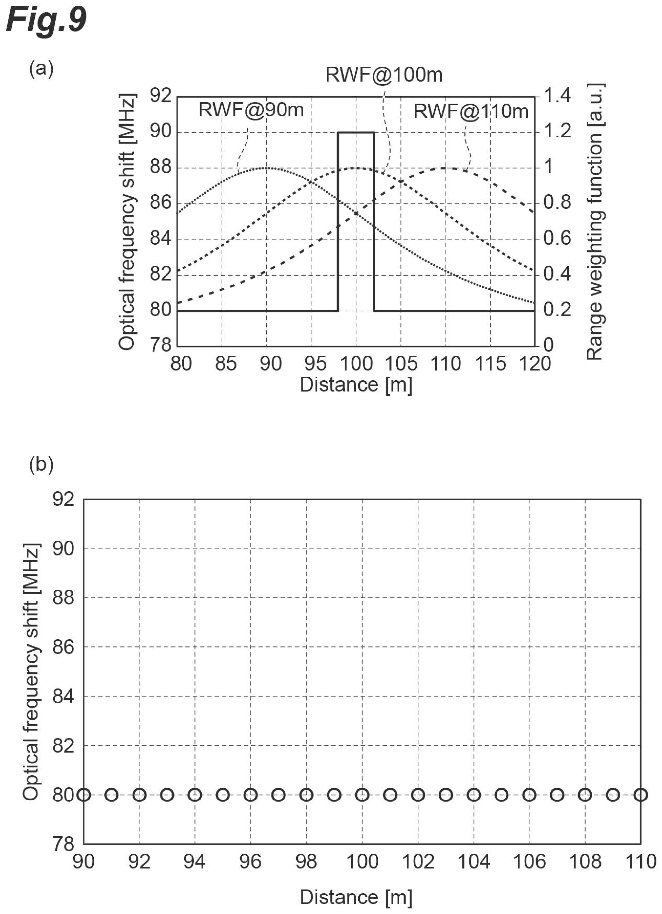

FIG. 9(a) is a diagram illustrating simulation conditions of a wind speed detection by a measurement method according to a comparative example. In addition, FIG. 9(b) is a diagram illustrating a result thereof. In the comparative example, as the simulation conditions, a lens diameter was 50 mm, a detection range was 100 m, an RWF was Lorentzian, and a full width at half maximum of the RWF was 34 m. In addition, in the comparative example, as illustrated in FIG. 9(a), a measurement target (constant wind speed) was set in a range of a distance of 100 m ± 2 m. Then, a shift amount of a peak frequency in a beat spectrum of interference light was acquired while a peak position of the RWF generated by focusing measurement light was varied in increments of 1 m.

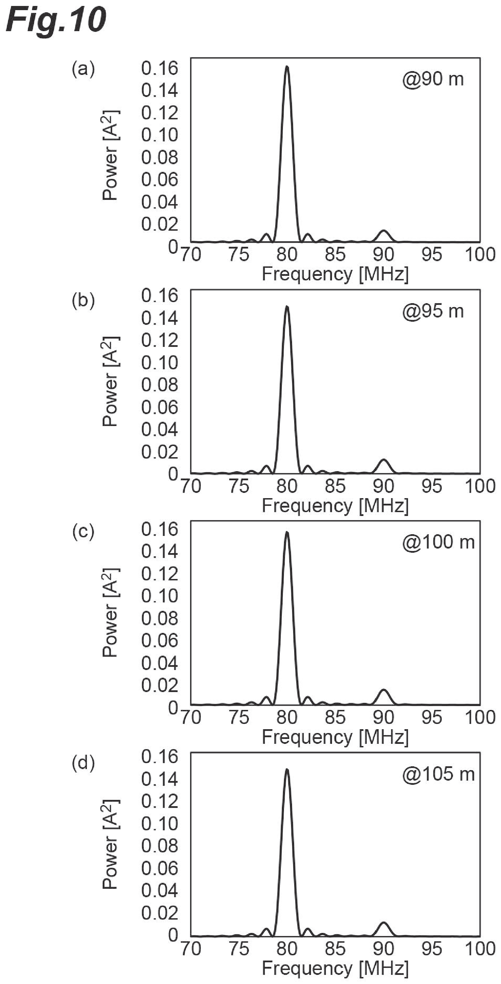

In the comparative example, as illustrated in FIG. 9(b), the peak frequency was not shifted even in the range of the distance of 100 m ± 2 m, and the constant wind speed, which was the measurement target, was not detected. This is considered to be because the measurement target is in the range of 4 m, whereas the full width at half maximum of the RWF is 34 m, influence of a detection signal in a range other than the measurement target increases, and the peak frequency was not shifted. This can also be confirmed from the fact that, as illustrated in FIGS. 10(a) to 10(d), in each beat spectrum at distances 90 m, 95 m, 100 m, and 105 m, a peak appears at a position of a frequency of 90 MHz, but a peak at a position of a frequency of 80 MHz is dominant.

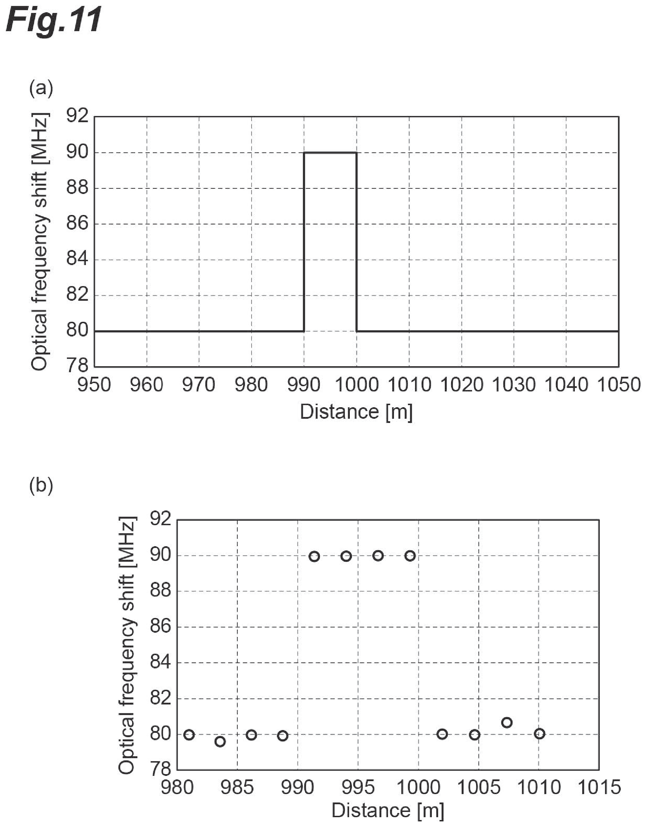

FIG. 11(a) is a diagram illustrating simulation conditions of a wind speed detection by a measurement method according to Example 1 (1st measurement method), and FIG. 11(b) is a diagram illustrating a result thereof. In Example 1, as illustrated in FIG. 11(a), a measurement target (constant wind speed) was set in a range of a distance of 995 m ± 5 m. Then, a beat spectrum of interference light was acquired while changing a modulation rate fm between 148.4 kHz and 152.8 kHz in increments of 0.4 kHz, and a peak frequency thereof was extracted.

In Example 1, a detection range ZR in a case where the modulation rate fm is 148.4 kHz corresponds to 1010 m, and the detection range ZR in a case where the modulation rate fm is 152.8 kHz corresponds to 981 m. In addition, a modulation width B was set to 100 MHz. A range resolution ΔZr in this case is 1.4 m. The RWF under the collimation condition was the same as that illustrated in FIG. 5.

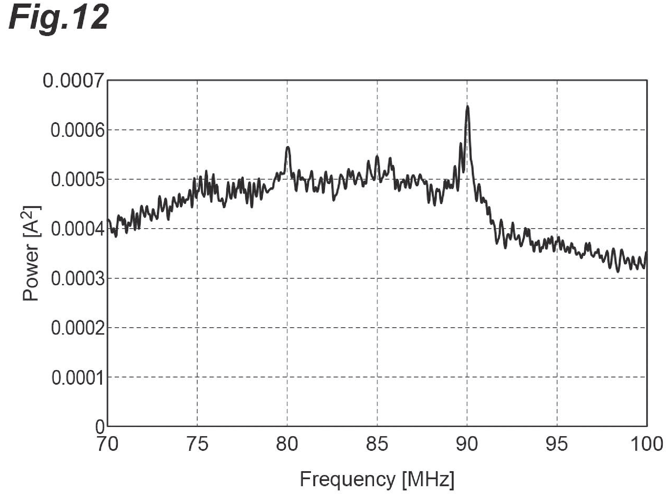

In Example 1, as illustrated in FIG. 11(b), the peak frequency was shifted by about 10 MHz in a range of a distance of 995 ± 5 m, and it can be seen that a constant wind speed, which was the measurement target, was detected. FIG. 12 is a diagram illustrating a waveform of the beat spectrum of the interference light at a distance 995.3 m in Example 1. As illustrated in FIG. 12, it can be confirmed that, in the beat spectrum at the distance of 995.3 m, a 2nd-order peak weakly appears at a frequency of 80 MHz, but a peak at a position of a frequency of 90 MHz is dominant. Hence, it can be seen that in Example 1, wind speed can be detected by extracting one measurement point from a plurality of measurement points for a certain modulation frequency.

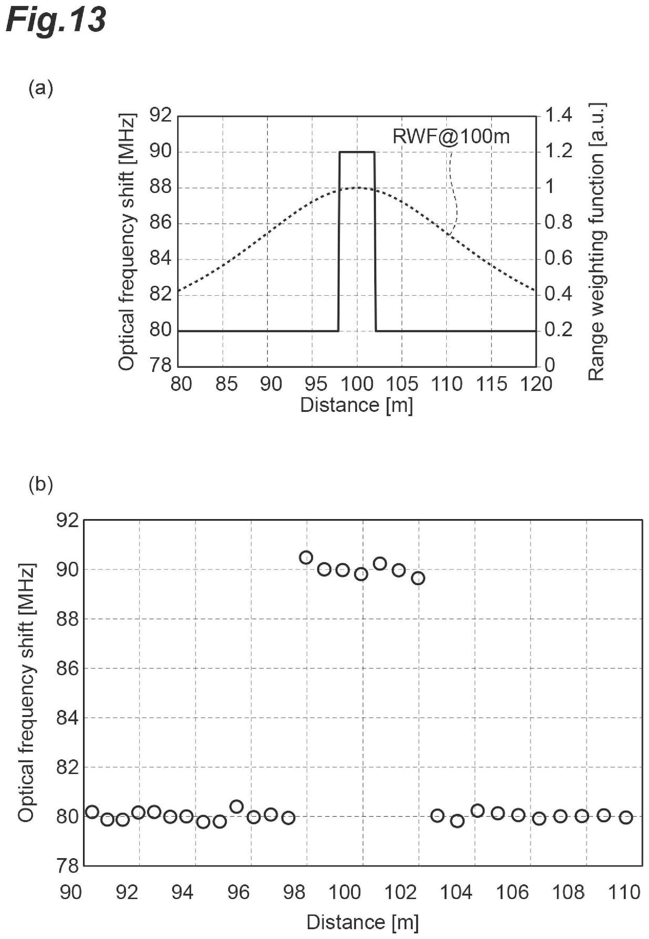

FIG. 13(a) is a diagram illustrating simulation conditions of a wind speed detection by a measurement method according to Example 2 (2nd measurement method), and FIG. 13(b) is a diagram illustrating a result thereof. In Example 2, as the simulation conditions, a lens diameter was 50 mm, a detection range was 100 m, an RWF was Lorentzian, and a full width at half maximum of the RWF was 34 m. A modulation width B of the measurement light was set to 100 MHz. A range resolution ΔZr in this case is 1.4 m.

In addition, in Example 2, as illustrated in FIG. 13(a), a measurement target (constant wind speed) was set in a range of a distance of 100 m ± 2 m. Then, a peak position of the RWF generated by focusing measurement light was fixed at a position of 100 m, a beat spectrum of interference light was acquired while changing a modulation rate fm between 1.37 MHz and 1.66 MHz in increments of 10 kHz, and a peak frequency thereof was extracted.

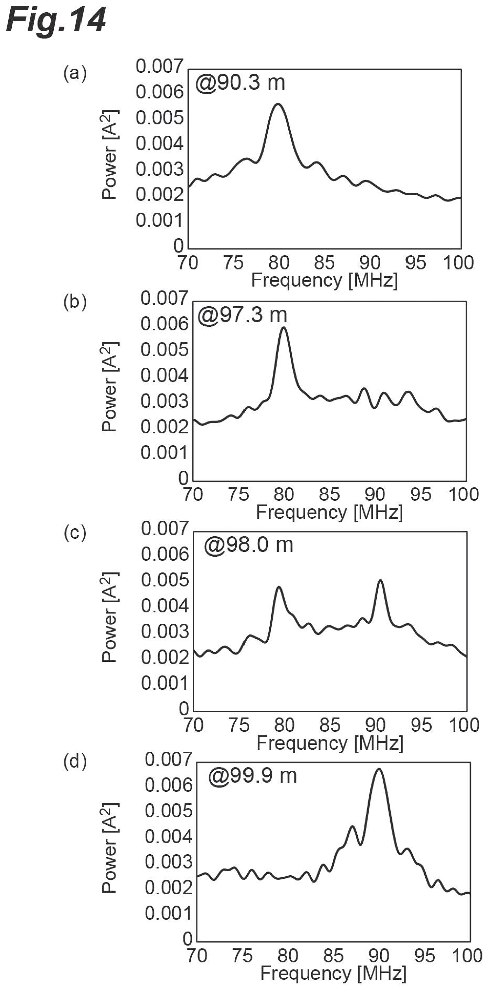

In Example 2, as illustrated in FIG. 13(b), the peak frequency was shifted by about 10 MHz in a range of a distance of 100 ± 2 m, and it can be seen that a constant wind speed, which was the measurement target, was detected. In addition, in Example 2, as illustrated in FIGS. 14(a) to 14(d), a peak appears at a position of a frequency of 80 MHz in beat spectra at distances of 90.3 m and 97.3 m, peaks appear at positions of frequencies of 79 MHz and 90 MHz in a beat spectrum at a distance of 98.0 m, and a peak appears at a position of a frequency of 90 MHz in a beat spectrum at a distance of 99.9 m. From these results, similarly to Example 1, it can be seen that in Example 2 also, wind speed can be detected by extracting one measurement point from a plurality of measurement points for a certain modulation frequency.

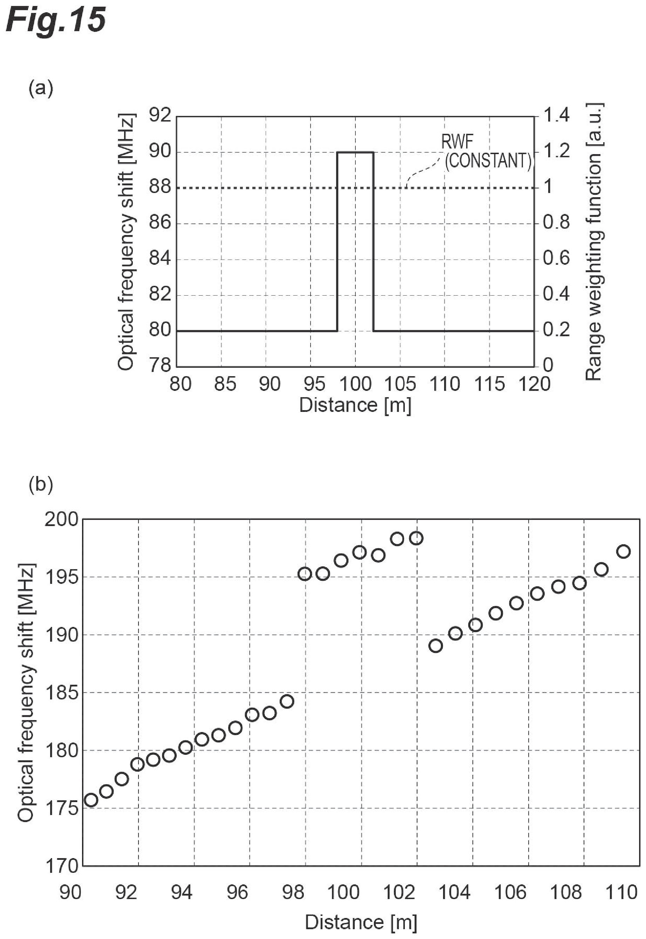

FIG. 15(a) is a diagram illustrating simulation conditions of a wind speed detection by a measurement method according to Example 3 (3rd measurement method), and 15(b) is a diagram illustrating a result thereof. In Example 3, as the simulation conditions, a lens diameter was 50 mm, and a detection range was 100 m. A modulation width B of the measurement light was set to 100 MHz. A range resolution ΔZr in this case is 1.4 m. In addition, a chirp rate (inclination of linear change superimposed on sinusoidal modulation) of the measurement light was set to 160 THz/sec.

In addition, in Example 3, as illustrated in FIG. 15(a), a measurement target (constant wind speed) was set in a range of a distance of 100 m ± 2 m. Then, the RWF generated by focusing measurement light was always constant independent of a distance, a beat spectrum of interference light was acquired while changing a modulation rate fm between 1.37 MHz and 1.66 MHz in increments of 10 kHz, and a peak frequency thereof was extracted.

In Example 3, as illustrated in FIG. 15(b), the peak frequency was shifted by about 10 MHz in a range of a distance of 100 ± 2 m, and it can be seen that a constant wind speed, which was the measurement target, was detected. In FIG. 15(b), the peak frequency with respect to the distance linearly increases with an inclination based on the chirp rate of the measurement light, but by correcting the linear increase in the peak frequency on the basis of the chirp rate of the measurement light, the wind speed can be detected similarly to the case of Example 2.

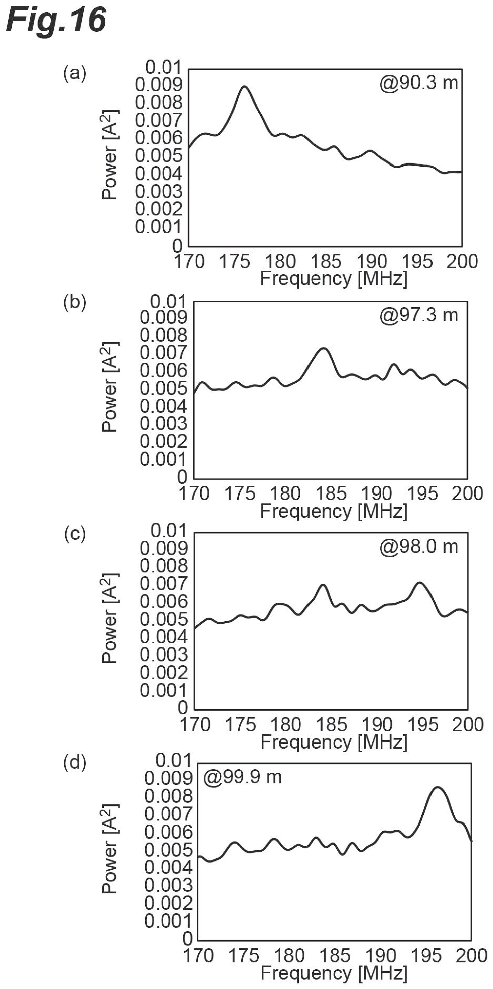

In Example 3, as illustrated in FIGS. 16(a) to 16(d), a peak appears at a position of a frequency of 176 MHz in a beat spectrum at a distance of 90.3 m, and a peak appears at a position of a frequency of 184 MHz in a beat spectrum at a distance of 97.3 m. In addition, peaks appear at positions of frequencies of 184 MHz and 195 MHz in a beat spectrum at a distance of 98.0 m, and a peak appears at a position of a frequency of 196 MHz in a beat spectrum at a distance of 99.9 m.

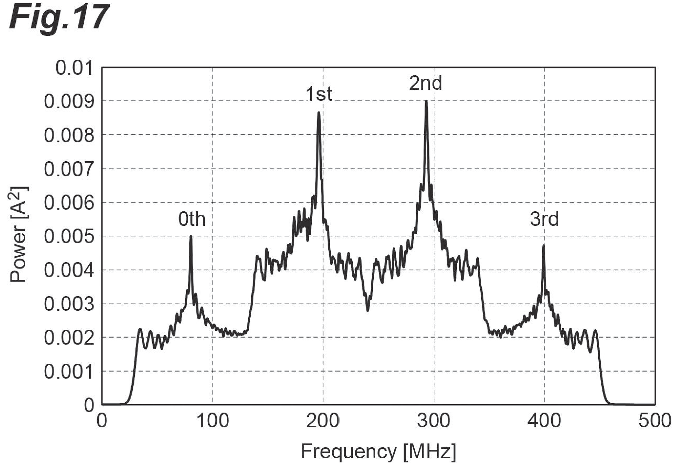

FIG. 17 illustrates a beat spectrum of the interference light in Example 3 in a range of 0 MHz to 500 MHz. In the example illustrated in FIG. 17, it can be seen that the 0th to 3rd peak frequencies of the beat spectrum are separated at intervals of about 100 MHz on a frequency axis. From these results, similarly to Examples 1 and 2, it can be seen that in Example 3 also, wind speed can be detected by extracting one measurement point from a plurality of measurement points for a certain modulation frequency.

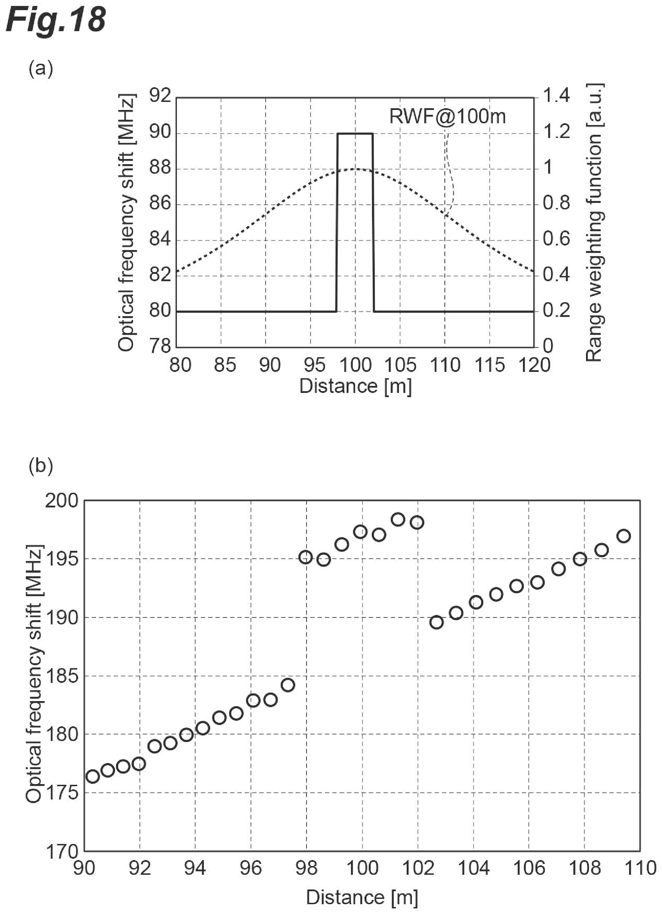

FIG. 18(a) is a diagram illustrating simulation conditions of a wind speed detection by a measurement method according to Example 4 (a combination of the 2nd measurement method and the 3rd measurement method), and 18(b) is a diagram illustrating a result thereof. In Example 4, as the simulation conditions, a lens diameter was 50 mm, a detection range was 100 m, an RWF was Lorentzian, and a full width at half maximum of the RWF was 34 m. A modulation width B of the measurement light was set to 100 MHz. A range resolution ΔZr in this case is 1.4 m. A chirp rate (inclination of linear change superimposed on sinusoidal modulation) of the measurement light was set to 160 THz/sec.

In addition, in Example 4, as illustrated in FIG. 18(a), a measurement target (constant wind speed) was set in a range of a distance of 100 m ± 2 m. Then, a peak position of the RWF generated by focusing measurement light was fixed at a position of 100 m, a beat spectrum of interference light was acquired while changing a modulation rate fm between 1.37 MHz and 1.66 MHz in increments of 10 kHz, and a peak frequency thereof was extracted.

In Example 4, as illustrated in FIG. 18(b), the peak frequency was shifted by about 10 MHz in a range of a distance of 100 ± 2 m, and it can be seen that a constant wind speed, which was the measurement target, was detected. In FIG. 18(b), the peak frequency with respect to the distance linearly increases with an inclination based on the chirp rate of the measurement light, but by correcting the linear increase in the peak frequency on the basis of the chirp rate of the measurement light, the wind speed can be detected similarly to the case of Example 2.

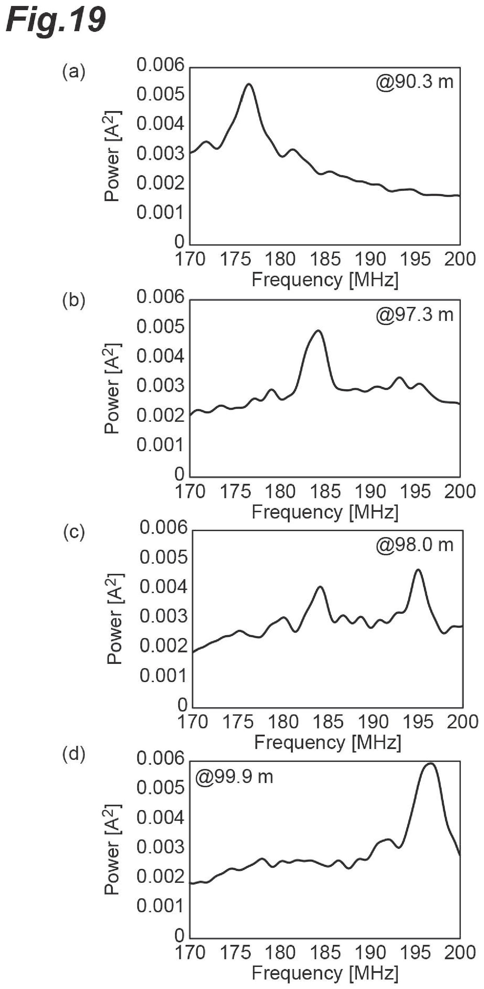

In Example 4, as illustrated in FIGS. 19(a) to 16(d), a peak appears at a position of a frequency of 176 MHz in a beat spectrum at a distance of 90.3 m, and a peak appears at a position of a frequency of 184 MHz in a beat spectrum at a distance of 97.3 m. In addition, peaks appear at positions of frequencies of 184 MHz and 195 MHz in a beat spectrum at a distance of 98.0 m, and a peak appears at a position of a frequency of 196 MHz in a beat spectrum at a distance of 99.9 m. From these results, similarly to Examples 1 to 3, it can be seen that in Example 4 also, wind speed can be detected by extracting one measurement point from a plurality of measurement points for a certain modulation frequency.

The present disclosure is not limited to the above embodiment. For example, in the above embodiment, the output direction of the measurement light Lm directed to the atmosphere M is deflected to an arbitrary direction by using the beam deflection plate 24, but the deflection of the output direction of the measurement light Lm may be achieved by using another configuration. For example, the output direction of the measurement light Lm directed to the atmosphere M may be deflected to an arbitrary direction by disposing a mirror outside the lens 22 and adjusting an angle of the mirror. In addition, by moving the end Fa of the optical fiber F up, down, left, or right, the output direction of the measurement light Lm directed to the atmosphere M may be deflected to an arbitrary direction.

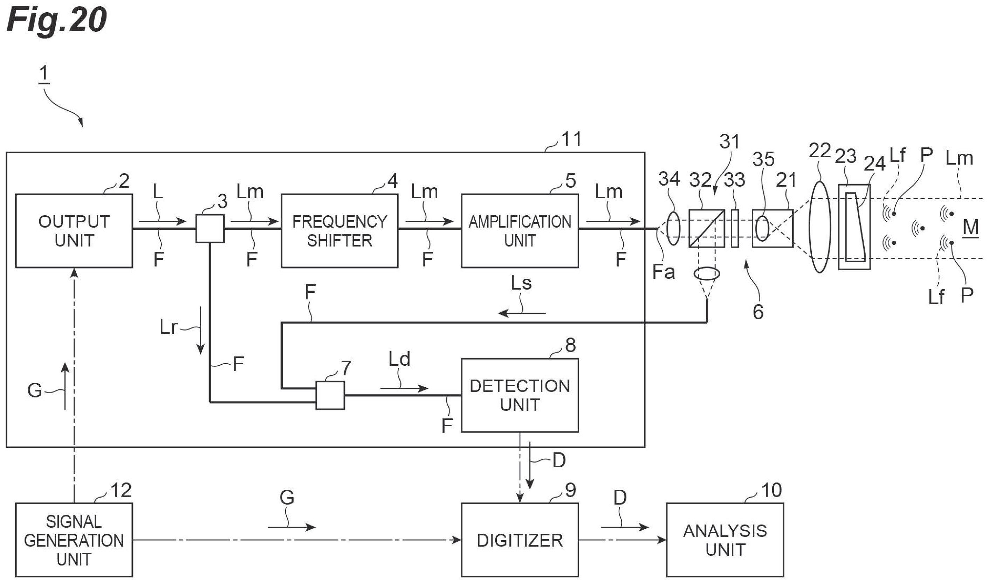

In addition, in the above embodiment, the circulator 25 of optical-fiber device type is exemplified, but a circulator 31 of spatial optical system type as illustrated in FIG. 20 may be used. In the example in FIG. 20, the circulator 31 of spatial optical system type includes a polarization beam splitter 32 and a quarter-wave plate 33. A lens 34 is disposed at a preceding stage of the polarization beam splitter 32, and a lens 35 mounted on the movable stage 21 is disposed at a subsequent stage of the quarter-wave plate 33. The lenses 34 and 35 may be either a convex lens or a concave lens.

According to such a configuration, a distance between the lens 35 and the lens 22 can be adjusted by displacing the movable stage 21 in the optical axis direction of the measurement light Lm. Thus, a focal position of the measurement light Lm emitted into the atmosphere M through the lens 22 can be displaced in the optical axis direction of the measurement light Lm, and the measurement light Lm emitted into the atmosphere M through the lens 22 can be collimated.

### Reference Signs List

- 1: Wind speed detection device
- 2: Output unit
- 3: Splitting unit
- 6: Measurement optical system
- 8: Detection unit
- 10: Analysis unit
- 11: Photonic integrated circuit
- 12: Signal generation unit
- 21: Movable stage (scanning unit)
- 22: Lens (optical element)
- 23: Rotation stage (deflection unit)
- 24: Beam deflection plate (deflection unit)
- L: CW laser light
- Lm: Measurement light
- Lr: Reference light
- Lf: Scattered light
- Ls: Signal light
- C: Focal position
- D: Detection signal
- G: Modulation signal
- M: The atmosphere

## Claims

1. A wind speed detection device comprising:
an output unit configured to output CW laser light whose frequency is non-linearly and periodically modulated;
a splitting unit configured to split the CW laser light into measurement light and reference light;
a measurement optical system configured to output the measurement light into the atmosphere, and receive scattered light of the measurement light in the atmosphere as signal light; and
a detection unit configured to output a detection signal based on a result of interference of the reference light and the signal light.

2. The wind speed detection device according to claim 1, wherein a frequency of the CW laser light is modulated in a sinusoidal shape.

3. The wind speed detection device according to claim 2, wherein the measurement optical system includes an optical element configured to focus the measurement light into the atmosphere.

4. The wind speed detection device according to claim 3, wherein the measurement optical system includes a scanning unit configured to scan, in an optical axis direction of the measurement light, a focal position of the measurement light in the atmosphere.

5. The wind speed detection device according to claim 1 or 2, wherein the measurement optical system includes an optical element configured to collimate the measurement light and output the collimated measurement light into the atmosphere.

6. The wind speed detection device according to claim 1 or 2, wherein
a frequency of the CW laser light is modulated such that a linear change is superimposed on a non-linear and periodic modulation, and
the measurement optical system includes an optical element configured to collimate the measurement light and output the collimated measurement light into the atmosphere.

7. The wind speed detection device according to any one of claims 1 to 6, wherein the measurement optical system includes a deflection unit configured to deflect an output direction of the measurement light directed to the atmosphere.

8. The wind speed detection device according to any one of claims 1 to 7, wherein a photonic integrated circuit includes at least the output unit, the splitting unit, and the detection unit.

9. The wind speed detection device according to any one of claims 1 to 8, further comprising a signal generation unit configured to generate a modulation signal for the CW laser light.

10. The wind speed detection device according to any one of claims 1 to 9, further comprising an analysis unit configured to analyze a wind speed in the atmosphere on a basis of the detection signal.

11. A wind speed detection method comprising:
an output step of outputting CW laser light whose frequency is non-linearly and periodically modulated;
a splitting step of splitting the CW laser light into measurement light and reference light;
a measurement step of outputting the measurement light into the atmosphere, and receiving scattered light of the measurement light in the atmosphere as signal light; and
a detection step of outputting a detection signal based on a result of interference of the reference light and the signal light.

12. The wind speed detection method according to claim 11, wherein, in the output step, a frequency of the CW laser light is modulated in a sinusoidal shape.

13. The wind speed detection method according to claim 12, wherein, in the measurement step, the measurement light is focused into the atmosphere.

14. The wind speed detection method according to claim 13, wherein, in the measurement step, a focal position of the measurement light in the atmosphere is scanned in an optical axis direction of the measurement light.

15. The wind speed detection method according to claim 11 or 12, wherein, in the measurement step, the measurement light is collimated and output into the atmosphere.

16. The wind speed detection method according to claim 11 or 12, wherein
in the output step, a frequency of the CW laser light is modulated such that a linear change is superimposed on a non-linear and periodic modulation, and
in the measurement step, the measurement light is collimated and output into the atmosphere.

17. The wind speed detection method according to any one of claims 11 to 16, wherein, in the measurement step, an output direction of the measurement light directed to the atmosphere is deflected.

18. The wind speed detection method according to any one of claims 11 to 17, further comprising an analysis step of analyzing a wind speed in the atmosphere on a basis of the detection signal.
